# EUROPEAN PATENT SPECIFICATION

(11) **EP 3 846 453 B1**
(45) Date of publication and mention of the grant of the patent: **14.06.2023**
(21) Application number: 19220206.7
(22) Date of filing: 31.12.2019
(51) Int. Cl.: H04N 5/77, H04N 5/232, H04N 21/4728

(54) **AN APPARATUS, METHOD AND COMPUTER PROGRAM FOR RECORDING AUDIO CONTENT AND IMAGE CONTENT**
VORRICHTUNG, VERFAHREN UND COMPUTERPROGRAMM ZUR AUFZEICHNUNG VON AUDIOINHALT UND BILDINHALT
APPAREIL, PROCÉDÉ ET PROGRAMME INFORMATIQUE POUR ENREGISTRER UN CONTENU AUDIO ET UN CONTENU D'IMAGE

(43) Date of publication of application: 07.07.2021
(73) Proprietor: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); ERONEN, Antti, 33820 Tampere (FI); VILERMO, Miikka, 37200 Siuro (FI)
(74) Representative: Swindell & Pearson Limited

(56) References cited:
- EP-A1- 2 930 693
- US-A1- 2013 202 265
- US-A1- 2013 342 731

## Description

### TECHNOLOGICAL FIELD

Embodiments of the present disclosure relate to recording audio content and image content.

### BACKGROUND

When an apparatus comprises at least one camera and one or more microphones, if a user chooses a location to record that is optimal for audio it will often be sub-optimal for recording image content from the camera and if a user chooses a location to record that is optimal for recording image content from the camera it will often be sub-optimal for audio. The user often chooses a compromise location to record that is optimal for neither audio or image content or uses a remote camera and/or remote microphone which increases costs.

US 2013/342731 A1 discloses an apparatus for capturing audio and video. This document discloses capturing sound by changing a sound capture angle and/or automatically controlling a sound capture range while capturing video of a subject, according to a change in the capture location or capture mode of the subject.

### BRIEF SUMMARY

According to various, but not necessarily all, embodiments there is provided an apparatus comprising means for:
enabling user-definition of a first sub-portion of a field of view of at least one camera of the apparatus that has a first point of view, wherein the first sub-portion determines target image content for recorded image content;
enabling user-determination of a second point of view of the apparatus for recording target audio by one or more microphones of the apparatus and
recording audio by the one or more microphones of the apparatus when the apparatus has the user-determined second point of view, the recorded audio comprising the target audio; and
automatically defining a second sub-portion of the field of view of the at least one camera within the field of view of the at least one camera of the apparatus, when the apparatus has the user-determined second point of view, wherein the second sub-portion of the field of view of the at least one camera comprises content corresponding to the target image content; and recording a sub-portion of the field of view of the at least one camera of the apparatus as recorded image content, when the apparatus has the user-determined second point of view, wherein the sub-portion comprises the second sub-portion of the field of view of the at least one camera.

In some but not necessarily all examples, the apparatus comprises input means for user-definition, when the apparatus has the first point of view, of the first sub-portion of the field of view of the at least one camera of the apparatus that has the first point of view to define the target image content.

In some but not necessarily all examples, the apparatus comprises means for varying at least a location of a sub-portion of the field of view of the at least one camera to determine a sub-portion of the field of view of the at least one camera that comprises image content that corresponds to the target image content as the second sub-portion.

In some but not necessarily all examples, the apparatus comprises means for:
displaying in a viewport the field of view of the at least one camera; and
enabling user selection of the first sub-portion of the field of view of the at least one camera.

In some but not necessarily all examples, the user-selection of the first sub-portion of the field of view of the at least one camera comprises zooming to display a sub-portion of the field of view of the at least one camera.

In some but not necessarily all examples, the user-selection of the first sub-portion of the field of view of the at least one camera comprises user selection via a touch screen displaying in a viewport at least a part of the field of view of the at least one camera.

In some but not necessarily all examples, the apparatus comprises means for:
enabling user-determination of the target audio by enabling user-definition of a sub-portion of a sound field recorded by one or more microphones when the apparatus has the second point of view; and
recording audio by the one or more microphones of the apparatus when the apparatus has the user-determined second point of view, the recorded audio comprising a relatively enhanced version of the target audio.

In some but not necessarily all examples, the apparatus comprises means for providing real-time user guidance for changing a point of view of the apparatus during recording audio comprising the target audio and image content comprising the target image content.

In some but not necessarily all examples, the means for providing real-time user guidance for changing a point of view of the apparatus during recording is configured to enabling switching from recording using a first camera with digital zoom to recording using a second camera with optical zoom.

In some but not necessarily all examples, the apparatus comprises means for:
displaying in a viewport a sub-portion of the field of view of the at least one camera of the apparatus
wherein the means for providing real-time user guidance for changing a point of view of the apparatus during recording is configured to display, in the viewport, an instruction of how to change the point of view of the apparatus.

In some but not necessarily all examples, the apparatus comprises means for:
displaying in a viewport a sub-portion of the field of view of the at least one camera of the apparatus,
wherein the means for providing real-time user guidance for changing a point of view of the apparatus during recording is configured to vary an alignment between the recorded image and the image displayed in the viewport when an offset from central alignment of the target image content and the recorded image is detected.

In some but not necessarily all examples, the apparatus comprises means for:
capturing audio at the one or more microphones of the apparatus while the apparatus has a time-varying user-determined second point of view;
digitally processing the captured audio by the one or more microphones of the apparatus while the apparatus has the time-varying user-determined second point of view, to selectively emphasise the target audio; and
recording the digitally processed audio; and
recording image content comprising the target image content by automatically defining a second sub-portion of the field of view of the at least one camera within the field of view of the at least one camera of the apparatus, while the apparatus has the time-varying user-determined second point of view, wherein the recorded image content is a sub-portion of the field of view of the at least one camera of the apparatus, while the apparatus has the time-varying user-determined second point of view, that comprises the second sub-portion of the field of view of the at least one camera.

According to various, but not necessarily all, embodiments there is provided a method comprising:
enabling user-definition of a first sub-portion of a field of view of at least one camera of an apparatus that has a first point of view, wherein the first sub-portion determines target image content for recorded image content;
enabling user-determination of a second point of view of the apparatus for recording target audio by one or more microphones of the apparatus;
recording audio by the one or more microphones of the apparatus when the apparatus has the user-determined second point of view, the recorded audio comprising the target audio; and
automatically defining a second sub-portion of the field of view of the at least one camera within the field of view of the at least one camera of the apparatus, when the apparatus has the user-determined second point of view, wherein the second sub-portion of the field of view of the at least one camera comprises content corresponding to the target image content; and recording a sub-portion of the field of view of the at least one camera of the apparatus as recorded image content, when the apparatus has the user-determined second point of view, wherein the sub-portion comprises the second sub-portion of the field of view of the at least one camera.

According to various, but not necessarily all, embodiments there is provided a computer program that, when run on a computer, performs:
enabling user-definition of a first sub-portion of a field of view of at least one camera of an apparatus that has a first point of view, wherein the first sub-portion determines target image content for recorded image content;
enabling user-determination of a second point of view of the apparatus for recording target audio by one or more microphones of the apparatus;
recording audio by the one or more microphones of the apparatus when the apparatus has the user-determined second point of view, the recorded audio comprising the target audio; and
automatically defining a second sub-portion of the field of view of the at least one camera within the field of view of the at least one camera of the apparatus, when the apparatus has the user-determined second point of view, wherein the second sub-portion of the field of view of the at least one camera comprises content corresponding to the target image content; and recording a sub-portion of the field of view of the at least one camera of the apparatus as recorded image content, when the apparatus has the user-determined second point of view,
wherein the sub-portion comprises the second sub-portion of the field of view of the at least one camera.

According to various, but not necessarily all, embodiments there is provided examples as claimed in the appended claims.

### BRIEF DESCRIPTION

Some example embodiments will now be described with reference to the accompanying drawings in which:
FIG. 1 shows an example embodiment of the subject matter described herein;
FIG. 2A,2B, 2C, 2D show another example embodiment of the subject matter described herein;
FIG. 3A shows another example embodiment of the subject matter described herein;
FIG. 3B shows another example embodiment of the subject matter described herein;
FIG. 4A, 4B, 4C, 4D, 4E, 4F show another example embodiment of the subject matter described herein;
FIG. 5A, 5B show another example embodiment of the subject matter described herein;
FIG. 6A, 6B, 6C show another example embodiment of the subject matter described herein.

### DETAILED DESCRIPTION

The FIGs illustrate examples that enable at least some user-control of the recorded image content 80 and recorded audio 82.

An apparatus 100 can be configured to capture and record both an image (e.g. video) and audio. The modalities of audio and video are different, so the best point of view 40 (location 42 and/or orientation 44) for audio capture is not necessarily the best for image capture.

It would be desirable to have available methods, apparatus and computer programs that address this problem.

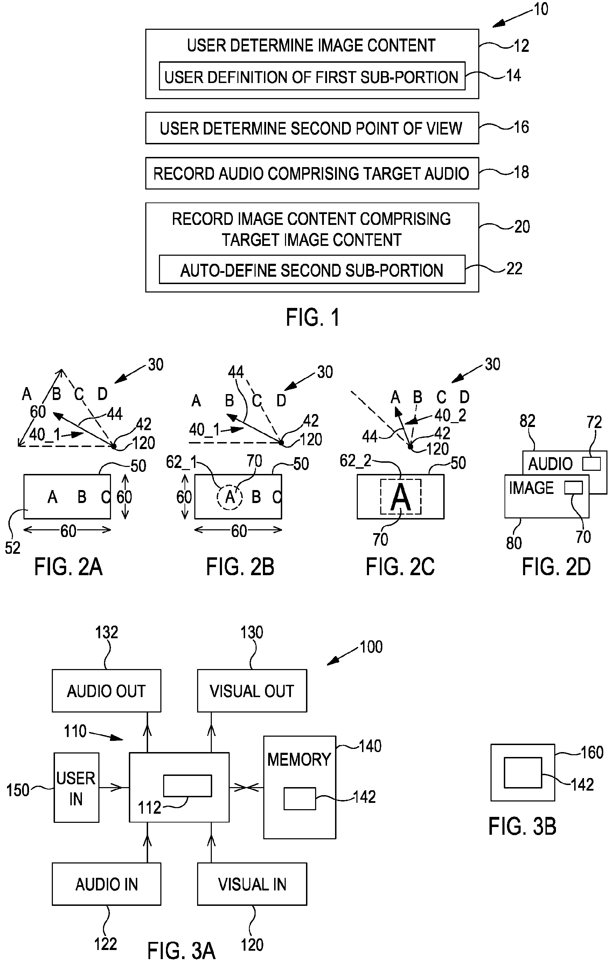

FIG 1 and FIGs 2A to 2D illustrates an example of a method 10. In this example, the method 10 is a method for enabling user-control of recorded image content 80 and recorded audio 82.

The method 10 comprises at block 12 enabling user-determination of target image content 70 for recorded image content 80 by, at block 14, enabling user-definition of a first sub-portion 62_1 of a field of view 60 of at least one camera 120 of an apparatus 100 that has a first point of view 40_1. The first sub-portion 62_1 determines target image content 70 for recorded image content 80.

The method 10 comprises at block 16 enabling user-determination of a second point of view 40_2 of the apparatus 100 for recording target audio 72 by one or more microphones 122 of the apparatus 100.

The method 10 comprises at block 18 recording audio by the one or more microphones 122 of the apparatus 100 when the apparatus 100 has the user-determined second point of view 40_2, the recorded audio 82 comprising the target audio 72.

The method 10 comprises at block 20 recording image content 52 comprising the target image content 70 by, at block 22, automatically defining a second sub-portion 62_2 of the field of view 60 of the at least one camera 120 within the field of view 60 of the at least one camera 120 of the apparatus 100, when the apparatus has the user-determined second point of view 40_2, wherein the recorded image content 80 is a sub-portion 62 of the field of view 60 of the at least one camera 120 of the apparatus, when the apparatus has the user-determined second point of view 40_2, that comprises the second sub-portion 62_2 of the field of view 60 of the at least one camera 120.

In FIG 2A, 2B and 2C a field of view 60 of at least one camera 120 of an apparatus 100 captures a visual scene 30. The apparatus 100 has a point of view 40 that defines a point of view 40 of the camera 120. The point of view 40 is defined by a location 42 and a direction (orientation) 44. The field of view 60 is defined by the direction 44 and, in this example, is centred on the direction 44. As the direction 44 and/or location 42 changes, the field of view 60 moves and the captured portion of the visual scene 30 changes.

In FIG 2A, 2B and 2C a viewport 50 displays the visual scene 30 as displayed image content 52. The viewport 50 can, for example, be provided by any suitable display 130 or other visual output device such as a head mounted display apparatus, a hand-portable display apparatus, a projector or any other suitable apparatus 100.

FIG 2A and 2B illustrate the same point of view 40 of the apparatus/camera at a first time and also the corresponding same displayed image content 52 in the viewport 50. This point of view 40 is labelled the first point of view 40_1.

FIG 2C illustrates a different point of view 40 of the apparatus/camera at a second later time and also the corresponding different displayed image content 52 in the viewport 50. This point of view 40 is labelled the second point of view 40_2.

FIG 2A & 2B illustrate user-determination of target image content 70 for recorded image content 80. As illustrated in FIG 2B, the user defines a first sub-portion 62_1 of the field of view 60 of the camera 120 of the apparatus 100 that has the first point of view 40_1.

The target image content 70 is that portion of the visual scene 30 that the user wants to be included in the recorded image content 80.

FIG 2C illustrates a later time when the apparatus/camera has the second point of view 40_2 that has been determined by a user by for example moving or re-directing the camera 120/apparatus 100.

The second point of view 40_2 of the apparatus 100 is chosen by the user for recording target audio 72 by one or more microphones 122 of the apparatus 100.

When the apparatus 100 has the user-determined second point of view 40_2, the apparatus 100 records audio using the one or more microphones 122 of the apparatus 100; and records image content 52 comprising the target image content 70.

The recording of the image content 52 comprising the target image content 70 can, for example, comprise: the apparatus 100 automatically defining a second sub-portion 62_2 of the field of view 60 of the at least one camera 120 within the field of view 60 of the at least one camera 120 of the apparatus 100. The recorded image content 80 is a sub-portion 62 of the field of view 60 of the at least one camera 120 of the apparatus, when the apparatus has the user-determined second point of view 40_2, that comprises the second sub-portion 62_2 of the field of view 60 of the at least one camera 120.

In some but not necessarily all examples, the recording of the image content 52 comprising the target image content 70 can, for example, comprise: the apparatus 100 automatically defining a second sub-portion 62_2 of the field of view 60 of the at least one camera 120 within the field of view 60 of the at least one camera 120 of the apparatus 100 and the recorded image content 80 is the second sub-portion 62_2 of the field of view 60 of the at least one camera 120 of the apparatus, when the apparatus has the user-determined second point of view 40_2.

However, while in some examples the recorded image content 80 consists of the second sub-portion 62_2 of the field of view 60, in other examples the recorded image content 80 comprises the second sub-portion 62_2 of the field of view 60, and includes other portions of the field of view 60.

The image content 52 that is recorded may be image content that is captured by the at least one camera 120 or by a different camera 120.

FIG 2D illustrates the recorded image content 80 and the recorded audio 82. The recorded audio 82 comprises the target audio 72. The recorded image content 80 comprises the target image content 70.

The recorded image content 80 is a sub-portion 62 of the field of view 60 of the at least one camera 120 of the apparatus, when the apparatus has the user-determined second point of view 40_2, that comprises the second sub-portion 62_2 of the field of view 60 of the at least one camera 120.

The image content 52 (and the visual scene 30) can be a real scene taken of the real world or can be a mediated reality scene. A mediated reality scene can be a real scene that is augmented with virtual objects. A mediated reality scene can be a virtual scene that is comprised of only virtual objects.

The audio can be real audio taken from the real world or can be mediated reality audio. Mediated reality audio can be real audio that is augmented with virtual sound objects and/or virtual ambient sounds. Mediated reality audio can be virtual audio that is comprised of only virtual sound objects and/or virtual ambient sounds.

The image content 52 can be a still image, a series of still images or video.

Fig 3A illustrates an example of an apparatus 100 comprising a controller 110, user input device 150, audio input circuitry 122, visual input circuitry 120, audio output circuitry 132 and visual output circuitry 130.

The audio input circuitry 122 can, for example, comprise one or more microphones.

The visual input circuitry 120 can, for example, comprise one or more cameras 120 each with a distinct image sensor.

The audio output circuitry 132 can, for example, comprise a loudspeaker or a jack or interface for audio output.

The visual output circuitry 130 can, for example, comprise a display or interface for controlling display.

The display 130 provides information in a form that is perceived visually by the user. The display 130 may be a visual display that provides light. Examples of visual displays include liquid crystal displays, organic light emitting displays, emissive, reflective, transmissive and transflective displays, direct retina projection display, near eye displays etc.

Implementation of a controller 110 may be as controller circuitry. The controller 110 may be implemented in hardware alone, have certain aspects in software including firmware alone or can be a combination of hardware and software (including firmware).

As illustrated in Fig 3A the controller 110 may be implemented using instructions that enable hardware functionality, for example, by using executable instructions of a computer program 142 in a general-purpose or special-purpose processor 112 that may be stored on a computer readable storage medium (disk, memory etc) to be executed by such a processor 112.

The processor 112 is configured to read from and write to the memory 140. The processor 112 may also comprise an output interface via which data and/or commands are output by the processor 112 and an input interface via which data and/or commands are input to the processor 112.

The memory 140 stores a computer program 142 comprising computer program instructions (computer program code) that controls the operation of the apparatus 100 when loaded into the processor 112. The computer program instructions, of the computer program 142, provide the logic and routines that enables the apparatus to perform the methods illustrated in Figs . The processor 112 by reading the memory 140 is able to load and execute the computer program 142.

The apparatus 100 therefore comprises:
at least one processor 112; and
at least one memory 140 including computer program code
the at least one memory 140 and the computer program code configured to, with the at least one processor 112, cause the apparatus 100 at least to perform:
   enabling user-definition of a first sub-portion 62_1 of a field of view 60 of at least one camera 120 of an apparatus that has a first point of view 40_1, wherein the first sub-portion 62_1 determines target image content 70 for recorded image content 80;
   enabling user-determination of a second point of view 40_2 of the apparatus for recording target audio 72 by one or more microphones of the apparatus;
   recording audio by the one or more microphones 122 of the apparatus 100 when the apparatus 100 has the user-determined second point of view 40_2, the recorded audio 82 comprising the target audio 72; and
   automatically defining a second sub-portion 62_2 of the field of view 60 of the at least one camera 120 within the field of view 60 of the at least one camera 120 of the apparatus 100, when the apparatus has the user-determined second point of view 40_2, and recording a sub-portion 62 of the field of view 60 of the at least one camera 120 of the apparatus 100 as recorded image content, when the apparatus has the user-determined second point of view 40_2, wherein the sub-portion 62 comprises the second sub-portion 62_2 of the field of view 60 of the at least one camera 120.

As illustrated in Fig 3B, the computer program 142 may arrive at the apparatus 100 via any suitable delivery mechanism 160. The delivery mechanism 160 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 142. The delivery mechanism may be a signal configured to reliably transfer the computer program 142. The apparatus 100 may propagate or transmit the computer program 142 as a computer data signal.

Computer program instructions for causing an apparatus to perform at least the following or for performing at least the following:
enabling user-definition of a first sub-portion 62_1 of a field of view 60 of at least one camera 120 of an apparatus that has a first point of view 40_1, wherein the first sub-portion determines target image content for recorded image content;
enabling user-determination of a second point of view 40_2 of the apparatus for recording target audio 72 by one or more microphones of the apparatus;
recording audio by the one or more microphones 122 of the apparatus 100 when the apparatus 100 has the user-determined second point of view 40_2, the recorded audio 82 comprising the target audio 72; and
automatically defining a second sub-portion 62_2 of the field of view 60 of the at least one camera 120 within the field of view 60 of the at least one camera 120 of the apparatus 100, when the apparatus has the user-determined second point of view 40_2, and
recording a sub-portion 62 of the field of view 60 of the at least one camera 120 of the apparatus 100 as recorded image content 80, when the apparatus has the user-determined second point of view 40_2, wherein the sub-portion 62 comprises the second sub-portion 62_2 of the field of view 60 of the at least one camera 120.

The computer program instructions may be comprised in a computer program, a non-transitory computer readable medium, a computer program product, a machine readable medium. In some but not necessarily all examples, the computer program instructions may be distributed over more than one computer program.

Although the memory 140 is illustrated as a single component/circuitry it may be implemented as one or more separate components/circuitry some or all of which may be integrated/removable and/or may provide permanent/semi-permanent/ dynamic/cached storage.

Although the processor 112 is illustrated as a single component/circuitry it may be implemented as one or more separate components/circuitry some or all of which may be integrated/removable. The processor 112 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixedfunction device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs may represent steps in a method and/or sections of code in the computer program 142. The illustration of a particular order to the blocks does not necessarily imply that there is a required or preferred order for the blocks and the order and arrangement of the block may be varied. Furthermore, it may be possible for some blocks to be omitted.

The apparatus 100 can therefore comprise means for:
enabling user-definition of a first sub-portion 62_1 of a field of view 60 of at least one camera 120 of an apparatus that has a first point of view 40_1, wherein the first sub-portion determines target image content for recorded image content;
enabling user-determination of a second point of view 40_2 of the apparatus for recording target audio 72 by one or more microphones of the apparatus;
recording audio by the one or more microphones 122 of the apparatus 100 when the apparatus 100 has the user-determined second point of view 40_2, the recorded audio 82 comprising the target audio 72; and
automatically defining a second sub-portion 62_2 of the field of view 60 of the at least one camera 120 within the field of view 60 of the at least one camera 120 of the apparatus 100, when the apparatus has the user-determined second point of view 40_2, and recording a sub-portion 62 of the field of view 60 of the at least one camera 120 of the apparatus 100 as recorded image content 80, when the apparatus has the user-determined second point of view 40_2, wherein the sub-portion 62 comprises the second sub-portion 62_2 of the field of view 60 of the at least one camera 120.

Referring back to FIG 2B, and block 14, in some examples the apparatus 100 has a user input 150 for user-definition of the first sub-portion 62_1 of the field of view 60 to define the target image content 70, when the apparatus 100 has the first point of view 40_1. For example, the apparatus 100 could comprise a gesture detector for detecting gestures of the user. For example, the apparatus 100 could comprise a touch screen device for detecting touch of the user at the screen. In some examples, the touch screen can be integrated with the display 130 to provide a touch display.

In some examples the target image content 70 is specified using computer vision parameters. For example, the image content 52 within the first sub-portion 62_1 of the field of view 60 is analysed to identify a collection of feature points. At block 22, automatically defining a second sub-portion 62_2 of the field of view 60 of the at least one camera 120 within the field of view 60 of the at least one camera 120 so that it comprises image content 52 corresponding to the target image content 70 comprises finding a sub-portion 62 of the field of view 60 that has a collection of feature points that correspond to the collection of feature points of the first sub-portion 62_1 of the field of view 60. The collection of feature points corresponds when the feature points match taking into account the possibility of different points of view (and different lighting) for capture.

Automatically defining the second sub-portion 62_2 of the field of view 60 of the at least one camera 120 within the field of view 60 of the at least one camera 120 can comprise varying a location and/or a size of a sub-portion 62 of the field of view 60 of the at least one camera 120 to determine a sub-portion 62 of the field of view 60 of the at least one camera 120 that comprises image content 52 that corresponds to the target image content 70 as the second sub-portion 62_2 e.g. corresponds to the target image content 70 by an amount that exceeds a threshold.

User input 150 can enable user-determination of the target audio 72 by enabling user-definition of a sub-portion 62 of a sound field recorded by one or more microphones 122 when the apparatus has the second point of view 40_2. The recorded audio 82 can comprise a relatively enhanced version of the target audio 72.

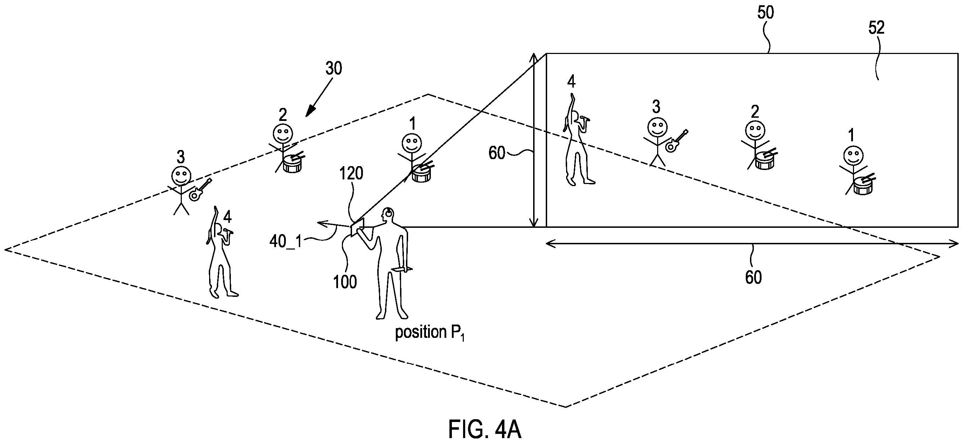

The FIGs 4A to 4F illustrate examples, that enable at least some user-control of the recorded image content 80 and recorded audio 82. FIG 4A to 4C illustrate that the apparatus 100 is configured to enable user-determination of target image content 70 for recorded image content 80.

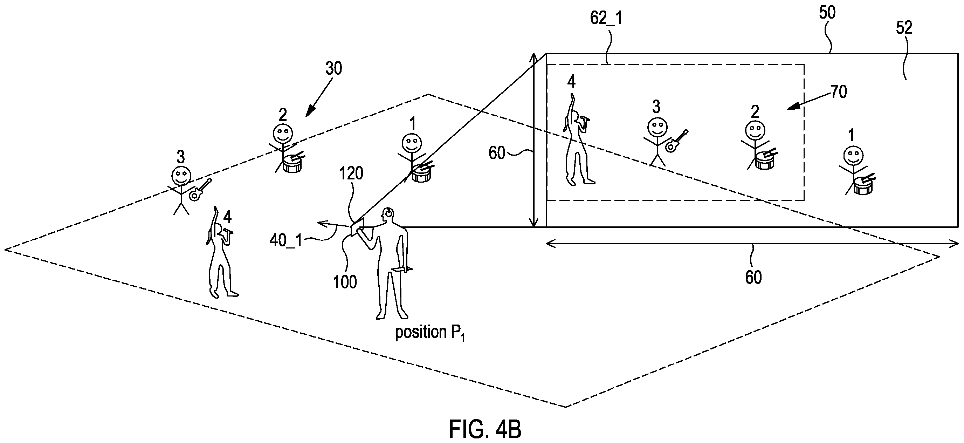

In FIG 4A and 4B the visual output circuitry 130 is configured to display in the viewport 50 the field of view 60 of the at least one camera 120. The camera 120/ apparatus 100 has a first point of view 40_1.

In FIG 4B, the apparatus 100 enables user-definition of a first sub-portion 62_1 of the field of view 60 of the at least one camera 120. The image content 52 in the first sub-portion 62_1 defines the target image content 70. The apparatus 100 enables user selection of the first sub-portion 62_1 of the field of view 60. The user-selection of the first sub-portion 62_1 of the field of view 60 can comprises user selection via a touch screen displaying in a viewport 50 at least a part of the field of view 60 of the at least one camera 120. The user-selection of the first sub-portion 62_1 of the field of view 60 can comprise zooming to display the sub-portion 62 of the field of view 60 of the at least one camera 120. The zooming can increase the magnification. The zooming can increase the magnification and also select a centre for the magnification, re-framing the zoomed image.

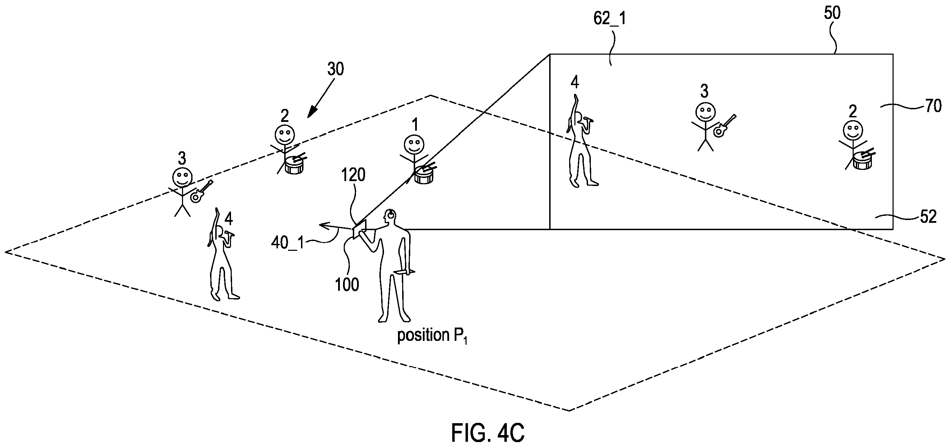

FIG 4C illustrates an example of a re-framed zoomed image. It illustrates a preview of the re-framed field of view. The point of view 40 is still the first point of view 40_1 and the field of view 60 is the same capturing some or all of the visual scene 30. However, the visual output circuitry 130 is configured to display, in the viewport 50, only content corresponding to the user-defined first sub-portion 62_1 of the field of view 60 of the at least one camera 120. The image content 52 in the first sub-portion 62_1 includes the target image content 70.

The content corresponding to the user-defined first sub-portion 62_1 of the field of view 60 can, for example, be a sub-set of the image content 52 captured by the at least one camera 120. In this example, a digital zoom is applied to the captured image content 52.

However, in other examples, the content corresponding to the user-defined first sub-portion 62_1 of the field of view 60 can, for example, be a full-field of view of the at least one camera 120 or of another camera 120 that uses an optical zoom.

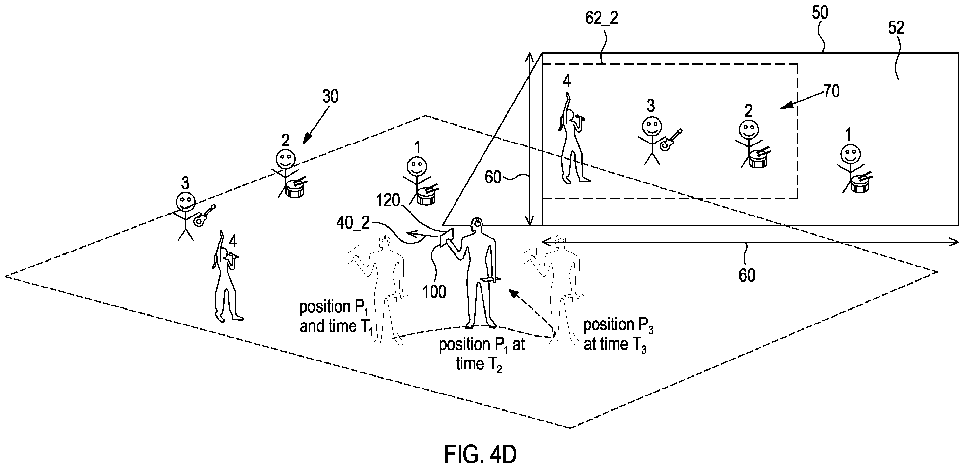

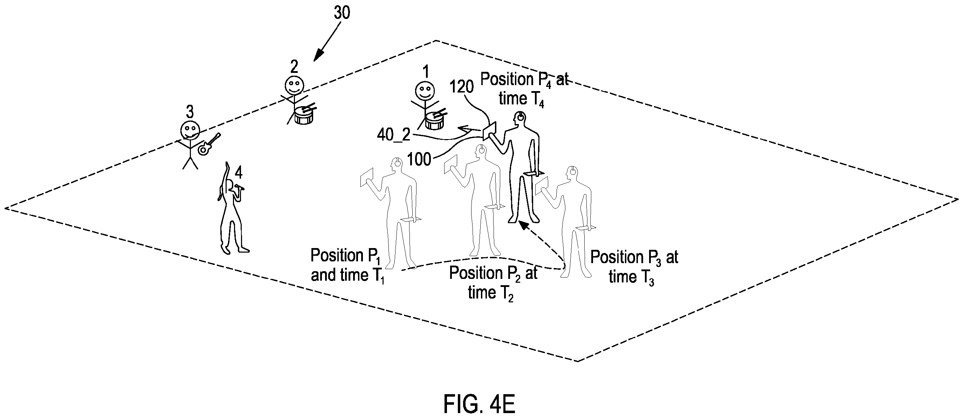

Figs 4D and 4E, illustrate a time later than that illustrated in FIGs 4A to 4C. The apparatus 100/camera 120 has a different user-determined point of view 40, a second point of view 40_2 for recording target audio 72 by one or more microphones 122 of the apparatus 100. The field of view 60 captures some or all of a different visual scene 30.

The second point of view 40_2 varies as the user changes the point of view 40, while audio captured from the one or more microphones is rendered by the apparatus 100 to the user, to search for a preferred point of view 40 for recording target audio 72 by the one or more microphones 122 of the apparatus 100.

Different acoustic effects are experienced for different points of view 40 because of the relative position and orientation of the sound sources to the one or more microphones of the apparatus 100 and the acoustic environment which is dependent on the acoustic material properties of the sound space.

The change in point of view 40 of the apparatus 100 can be a change in any one or more of three dimensions of location 42 and/or a change in any one or more of three dimensions of orientation 44.

While the user changes the point of view 40 of the apparatus 100 searching for a preferred point of view 40 for recording target audio 72, the viewport 50 can continue to display visual content captured by the camera 120 as a preview. For example, the apparatus 100 can be configured to display image content 52 comprising the target image content 70 by automatically defining a second sub-portion 62_2 of the field of view 60 of the at least one camera 120 within the field of view 60 of the at least one camera 120 of the apparatus 100, while the apparatus has the time-varying user-determined second point of view 40_2. The displayed image content is a sub-portion 62 of the field of view 60 of the at least one camera 120 of the apparatus 100, while the apparatus has the time-varying user-determined second point of view 40_2, that comprises the second sub-portion 62_2 of the field of view 60 of the at least one camera 120. The displayed image content can, for example, be the second sub-portion 62_2 of the field of view 60 of the at least one camera 120.

In some but not necessarily all examples, the user is therefore able to check that the preferred point of view 40 for recording target audio 72 is also a point of view usable for recording target image content 70

In FIG 4E, the apparatus 100 has a second point of view 40_2 that is varying through position P1, through position P2 to an optimal position P3 (FIG 4E).

The point of view 40 varies as the user changes the point of view 40, while audio captured from the one or more microphones is rendered by the apparatus 100 to the user, to search for a preferred point of view 40 for recording target audio 72 by the one or more microphones 122 of the apparatus 100.

When the preferred point of view 40_2 for recording target audio 72 by the one or more microphones 122 of the apparatus 100 has been found (FIG 4E), the user can provide an input to the apparatus 100.

The user input could, for example, be a double tap on a touch display displaying the viewport 50.

The user input that determines the preferred point of view 40_2 for recording target audio 72 can also be used to automatically start audio recording. However, in other examples an additional user input is used to cause audio recording.

The apparatus 100 can thus enable user-determination of the target audio 72 by enabling user-definition of a sub-portion of a sound field recorded by one or more microphones 122 when the apparatus has the second point of view 40_2. The apparatus 100 records audio captured by the one or more microphones 122 of the apparatus 100. The recorded audio 82 comprises the target audio 72.

In some but not necessarily all examples, when the preferred point of view 40_2 for recording target audio 72 by the one or more microphones 122 of the apparatus 100 has been found (FIG 4E), the user can provide an input to the apparatus 100 that selects a sub-portion of the captured sound field. This allows an audio focus on a specific object. Audio focus can, for example, be achieved using differential gain for different microphones. Audio focus can, for example, be achieved using differential gain and phase (beam forming) for different microphones. The apparatus 100 can thus enable user-determination of the target audio 72 by enabling user-definition of a sub-portion 62 of a sound field recorded by one or more microphones 122 when the apparatus has the second point of view 40_2. The apparatus 100 records audio by the one or more microphones 122 of the apparatus 100 when the apparatus 100 has the user-determined second point of view 40_2, the recorded audio 82 comprising a relatively enhanced version of the target audio 72.

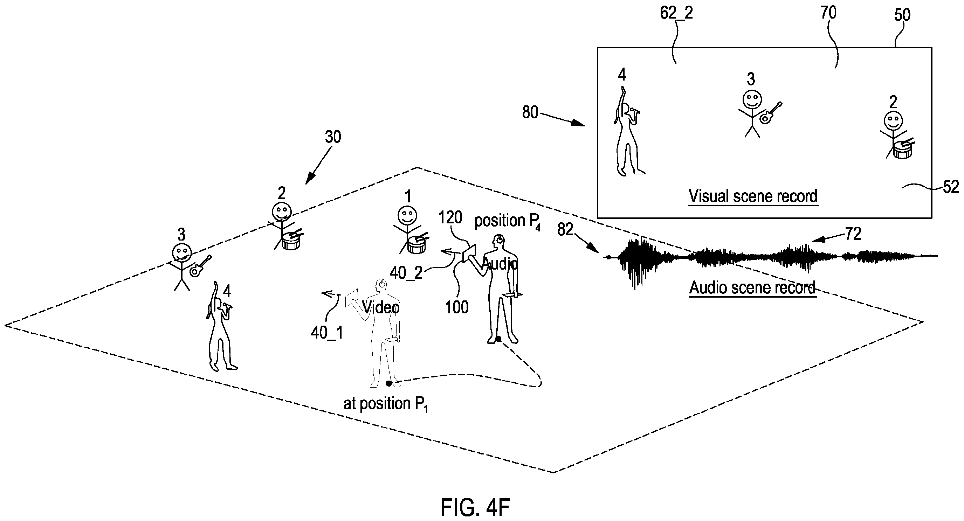

Fig 4F, illustrate a time later than that illustrated in FIGs 4D to 4E. The apparatus 100/camera 120 has a different user-determined point of view 40, a different second point of view 40_2 for recording target audio 72 by one or more microphones 122 of the apparatus 100 as recorded audio 82 and for recording target image content 70 as recorded image content 80.

Visual output circuitry 130 is configured to display, in the viewport 50, image content 52 that is being recorded. The viewport 50 displays a sub-portion 62 of a field of view 60 of the camera 120, for example, the second sub-portion 62_2 of the field of view 60 of the at least one camera 120. The image content 52 in the second sub-portion 62_2 includes the target image content 70.

The apparatus 100 is configured to record audio captured by the one or more microphones 122 of the apparatus 100 when the apparatus 100 has the user-determined second point of view 40_2. The recorded audio 82 comprises the target audio 72.

The apparatus 100 is configured to record image content 52 comprising the target image content 70. It automatically defines the second sub-portion 62_2 of the field of view 60 of the at least one camera 120 within the field of view 60 of the at least one camera 120 of the apparatus 100, when the apparatus has the user-determined second point of view 40_2. The recorded image content 80 is a sub-portion 62 of the field of view 60 of the at least one camera 120 of the apparatus, when the apparatus has the user-determined second point of view 40_2, that comprises the second sub-portion 62_2 of the field of view 60 of the at least one camera 120.

The apparatus 100 is configured to record automatically audio comprising the target audio 72 and to record automatically image content 52 comprising the target image content 70 as user-determined second point of view 40_2 is varied by the user over time

The apparatus 100 is therefore configured to:
capture audio at the one or more microphones of the apparatus while the apparatus has a time-varying user-determined second point of view 40_2;
digitally process the captured audio by the one or more microphones of the apparatus while the apparatus has the time-varying user-determined second point of view 40_2, to selectively emphasise the target audio 72;
record the digitally processed audio; and
record image content 52 comprising the target image content 70 by automatically defining a second sub-portion 62_2 of the field of view 60 of the at least one camera 120 within the field of view 60 of the at least one camera 120 of the apparatus 100, while the apparatus has the time-varying user-determined second point of view 40_2, wherein the recorded image content 80 is a sub-portion 62 of the field of view 60 of the at least one camera 120 of the apparatus 100, while the apparatus has the time-varying user-determined second point of view 40_2, that comprises the second sub-portion 62_2 of the field of view 60 of the at least one camera 120.

Recording image content 52 comprising the target image content 70 can, for example, comprise recording only the second sub-portion 62_2 of the field of view 60 of the camera 120.

Recording image content 52 comprising the target image content 70 can, for example, comprise automatically cropping the field of view 60 of the camera 120.

Recording image content 52 comprising the target image content 70 can, for example, comprise automatically recording image content from a camera with a greater optical zoom.

The recorded image content 80 can be limited to the second sub-portion 62_2 of the field of view 60 of the at least one camera 120. The image content 52 in the second sub-portion 62_1 includes the target image content 70.

The visual output circuitry 130 can in some but not necessarily all examples be configured to display, in the viewport 50, an indication of what is being recorded. It can for example display a boundary of the second sub-portion 62_2 of the field of view 60 in the displayed field of view 60 of the camera 120 to display only the second sub-portion 62_2.

Thus, the target image content 70 is set (FIGs 4A to 4C) and the target audio 72 is set (FIGs 4D & 4E), then target image content 70 and the target audio 72 are recorded even as the apparatus 100 moves (FIG 4F).

Although in the examples illustrated the target image content 70 is set first followed by setting the target audio 72 in other examples the target audio 72 can be set first (FIG 4D & 4E) followed by setting the target image content 70 (FIGs 4A to 4C).

In some examples, a visual indication can be provided in the viewport 50 when the apparatus 100 is recording.

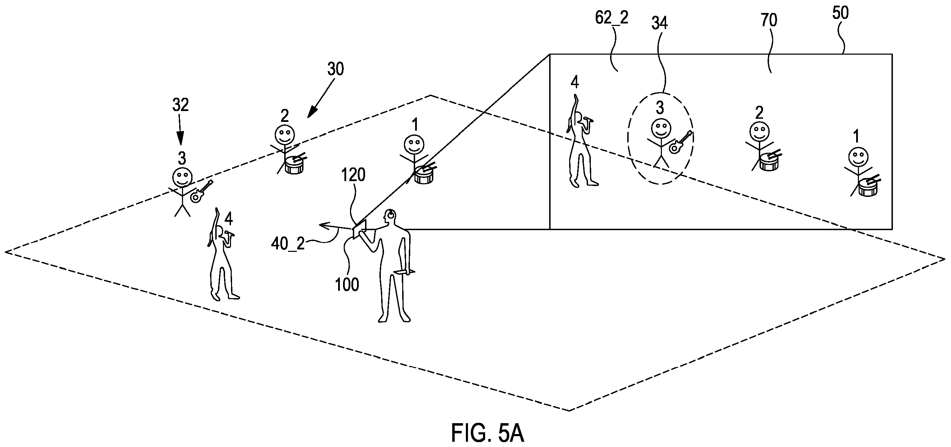

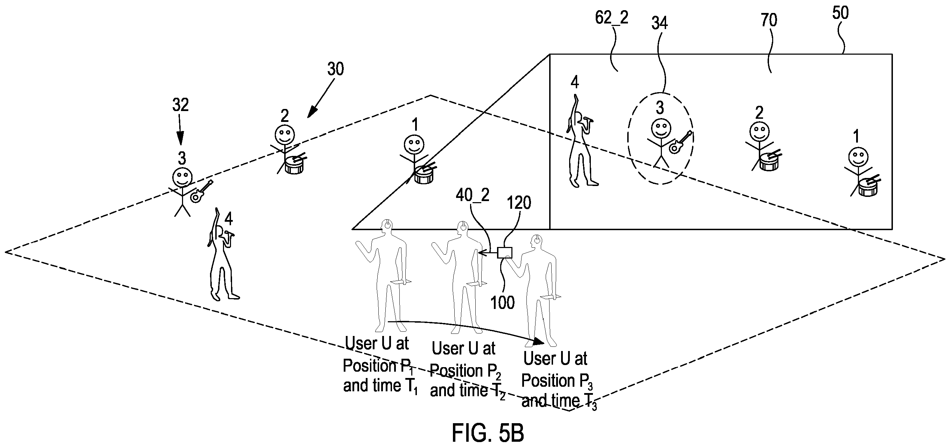

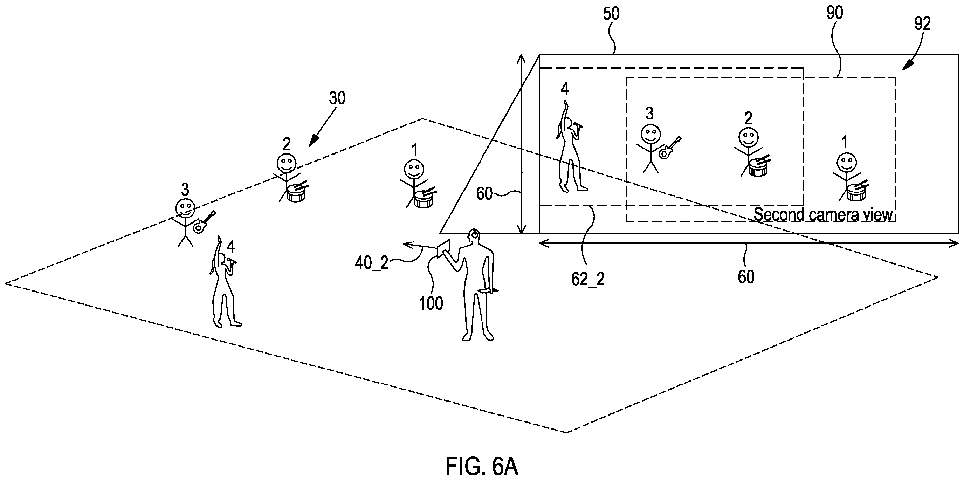

As illustrated in FIGs 5A and 5B, in some but not necessarily all examples, when the preferred point of view 40_2 for recording target audio 72 by the one or more microphones 122 of the apparatus 100 has been found (FIG 6A), the user can provide an input to the apparatus 100 that selects a sub-portion 32 of the captured sound field. This allows an audio focus on a specific object 34. Audio focus can, for example, be achieved using differential gain for different microphones. Audio focus can, for example, be achieved using differential gain and phase (beam forming) for different microphones.

The apparatus 100 can thus enable user-determination of the target audio 72 by enabling user-definition of a sub-portion 32 of a sound field recorded by one or more microphones 122 when the apparatus has the second point of view 40_2. The apparatus 100 records audio by the one or more microphones 122 of the apparatus 100 when the apparatus 100 has the user-determined second point of view 40_2, the recorded audio 82 comprising a relatively enhanced version of the target audio 72.

While the sub-portion 32 of a sound field that relates to the target audio 72 is maintained as the apparatus 100 moves. Thus, when the apparatus 100 moves the sub-portion 32 of a sound field that relates to the target audio 72 is emphasised, while the rest of the sound field is recorded without emphasis. Thus, by moving after selecting the target audio the apparatus 100 records the selected object 34 with a desired (maintained) audio level while the apparatus is moved to achieve a point of view 40 with the preferred sound ambience.

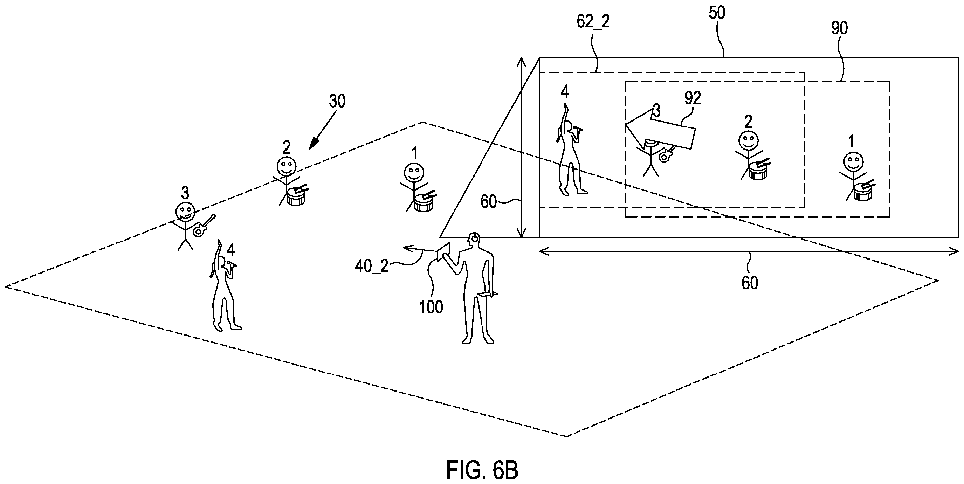

In the example illustrated in FIG 6B, the apparatus 100 is moved backwards after selecting the target audio 72 to incorporate more of the audio scene (e.g., ambience from other audio sources in the capturing space). The audio level of the selected object 34 is maintained despite the user moving further away (this may be performed based on skipping distance attenuation or performing audio focus in the direction of the indicated object of interest).

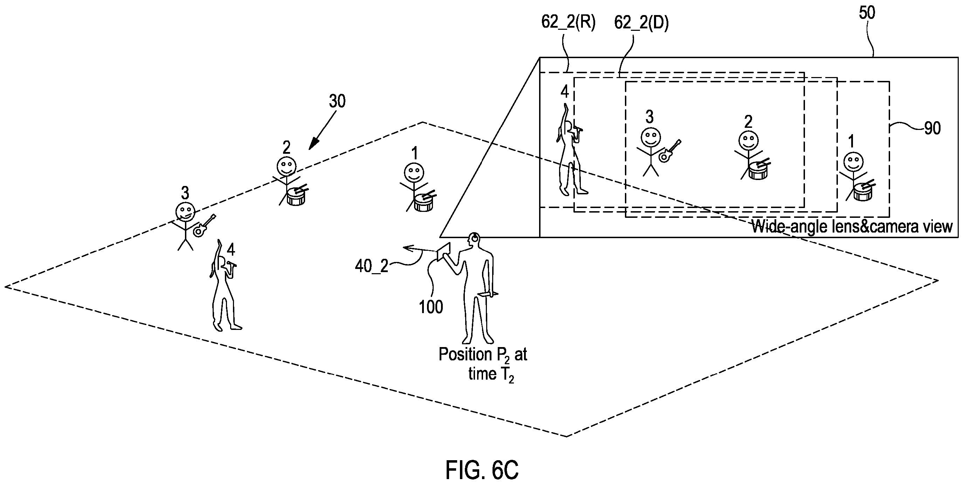

FIGs 6A, 6B, 6C Illustrate examples of the viewport 50 during recording of the recorded image content 80.

The FIGs illustrate a second sub-portion 62_2 of the field of view 60 of a first camera 120 within the field of view 60 of a first camera 120. The FIGs also illustrate a preferred position 90 for the second sub-portion 62_1 of the field of view 60 of a first camera 120 within the field of view 60 of a first camera 120. The preferred position 90 can for example be a central position within the viewport.

Although in this example, the second sub-portion 62_2 and the preferred location are visible in the viewport 50, in other examples they are not visible.

In some examples, the preferred position 90 centralizes the second sub-portion 62_2 of the field of view 60 of a first camera 120 within the field of view 60 of a first camera 120. This in effect centralizes the sensels (sensing elements) used within the camera 120 within the array of sensels of the camera 120.

In some examples, the preferred position (and size) centralizes the second sub-portion 62_2 of the field of view 60 of a first camera 120 within a field of view of a second camera 120 that uses optical zoom.

The apparatus 100 can, in some examples, be configured to provide real-time user guidance to the user so that they can change the point of view 40 of the apparatus 100 (orientation and/or location), during recording audio 82 comprising the target audio 72 and image content 80 comprising the target image content 70, so that the second sub-portion 62_2 of the field of view 60 of a first camera 120 matches (or is within a minimum tolerance of) the preferred position for the second sub-portion 62_2.

The viewport 50 displays a sub-portion 62 of the field of view 60 of the camera 120 of the apparatus 100. The displayed sub-portion 62 of the field of view 60 of the at least one camera 120 of the apparatus 100
- is or comprises image content 80 being recorded;
- is or comprises the second sub-portion 62_2 of the field of view 60 of the at least one camera 120
- comprises content at least partially corresponding to target image content 70

The apparatus 100 can, in some examples, be configured to provide real-time user guidance to the user by providing a visual cue 92 in the viewport 50. The visual cue 92 encourages movement of the point of view 40 of the apparatus 100 so that a location of the second sub-portion 62_2 of the field of view 60 of the camera 120 is at the preferred position 90.

The visual cue 92 can for example be an indication within the viewport 50 of a boundary of the second sub-portion 62_2 and a preferred position 90 of the boundary of the second sub-portion 62_2.

In the example of FIG 6B, although the second sub-portion 62_2 and the preferred position 90 are visible in the FIG they may or may not be displayed as demarcations in the viewport 50. The visual cue 92 in this example is a visual instruction of how to change the point of view 40 of the apparatus 100. In this example, the visual instruction instructs the user to move the point of view of the apparatus so that the second sub-portion 62_2 occupies the preferred position 90 within the viewport.

Although in this example, the content of the viewport 50 is illustrated as the field of view 60, in some examples the content of the viewport 50 is limited to only the second sub-portion 62_2 of the field of view and the visual cue 92.

In the example of FIG 6C, although in this example, the content of the viewport 50 is illustrated as the field of view 60, in some examples the content of the viewport 50 is limited to only the second sub-portion 62_2 of the field of view which provides the visual cue 92. This is the displayed second sub-portion 62_2(D) of the field of view.

It will be noticed that the second sub-portion 62_2 of the field of view 60 that is recorded as the recorded image content 80 is labelled 62_2(R) and is offset from the displayed second sub-portion 62_2(D) of the field of view. The displayed second sub-portion 62_2(D) is positioned between the recorded second sub-portion 62_2(R) and the preferred position 90 of the recorded second sub-portion 62_2(R). In this example, a portion of the target image content 70 that is within the recorded second sub-portion 62_2(R) is not within the displayed second sub-portion 62_2(D), encouraging the user to change the point of view 40 of the apparatus so that the target image content 70 is within the displayed second sub-portion 62_2(D) and the recorded second sub-portion 62_2(R) is at or near the preferred position 90. The displayed second sub-portion 62_2(D) via the offset therefore provides the visual cue 92.

The apparatus 100 thus displays in a viewport 50 a sub-portion 62_2(D) of the field of view 60 of the at least one camera 120 of the apparatus 100, and provides real-time user guidance for changing a point of view 40 of the apparatus 100 during recording by varying an alignment between the recorded image 62_2(R) and the image displayed 62_2(D) in the viewport 50 when an offset from central alignment (position 90) of the target image content 70 and the recorded image is detected. The apparatus 100 can automatically adjust the sub-portion 62_2(D) and sub-portion 62_2(R) so that the crop 62_2(R) includes the target image content 70 and the crop 62_2(D) fits the target image content 70 when the user moves the apparatus 100.

In the above example, the visual cue 92 encourages movement of the point of view 40 of the apparatus so that a location of the second sub-portion 62_2 of the field of view 60 of the camera 120 is centred within the field of view 60 of the camera 120 of the apparatus 100. This real-time user guidance for changing a point of view 40 of the apparatus 100 during recording can be configured to enabling switching from recording using a first camera 120 with digital zoom to recording using a second camera 120 with optical zoom. The preferred position 90 is determined by the field of view of the second camera with optical zoom.

This first camera can, for example, be a camera with a wide-angle lens and second camera has a telephoto lens. Both cameras can have about the same number of pixels and the same noise level per pixel.

Cropped images may be formed from the first camera 120 and the cropped image quality can be enhanced by using images from the second camera 120 in the parts where the cropped image from the first camera 120 and the second camera image overlap.

Image quality is improved because in the overlapping parts the second camera has more pixels for the same visual area because of the tele lens and for the same reason less noise.

Optimal crop image quality is achieved when the cropped image can be taken using second camera image only.

The visual cue 92 guides the user to point the apparatus 100 so that as much as possible of the second camera image is used.

At least some of the above examples relate to an apparatus 100 that captures/records both an image (e.g. video) and audio. The modalities of audio and video are different, so the best point of view (location and orientation) for audio is not necessarily the best for video.

The example comprises user-determination of target visual content via a displayed image, user determination of a location for recording audio, then at that location auto-cropping a captured camera image to record an image comprising the target content while recording audio.

As the recorded image is cropped compared to the detected image, less memory is required in storage and/or transport.

The user is able to separately optimize image content and audio content.

Examples allow multi-position capture of audio and image content while maintaining optimization of both.

The examples leverage use of an apparatus 100 that has a camera sensor that has a large number of sensels.

The examples leverage use of an apparatus 100 that has more than one microphone.

Where a structural feature has been described, it may be replaced by means for performing one or more of the functions of the structural feature whether that function or those functions are explicitly or implicitly described.

In the above examples, the recording of audio and/or image content can refer to the storage of audio and/or image content.

The recording of data may comprise only temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The above described examples find application as enabling components of:
automotive systems; telecommunication systems; electronic systems including consumer electronic products; distributed computing systems; media systems for generating or
rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. An apparatus (100) comprising means for:
enabling user-definition of a first sub-portion (62_1) of a field of view (60) of at least one camera (120) of the apparatus (100) that has a first point of view (40_1), wherein the first sub-portion determines target image content for recorded image content;
enabling user-determination of a second point of view (40_2) of the apparatus (100) for recording target audio (72) by one or more microphones (122) of the apparatus (100) and recording audio by the one or more microphones (122) of the apparatus (100) when the apparatus (100) has the user-determined second point of view (40_2), the recorded audio (82) comprising the target audio (72); and
automatically defining a second sub-portion (62_2) of the field of view (60) of the at least one camera (120) within the field of view (60) of the at least one camera (120) of the apparatus (100), when the apparatus (100) has the user-determined second point of view (40_2), wherein the second sub-portion (62_2) of the field of view (60) of the at least one camera (120) comprises content corresponding to the target image content; and
recording a sub-portion (62) of the field of view (60) of the at least one camera (120) of the apparatus (100) as recorded image content (80), when the apparatus (100) has the user-determined second point of view (40_2), wherein the sub-portion (62) comprises the second sub-portion (62_2) of the field of view (60) of the at least one camera (120).

2. An apparatus as claimed in claim 1, comprising user input means for user-definition, when the apparatus has the first point of view, of the first sub-portion of the field of view of the at least one camera of the apparatus that has the first point of view to define the target image content.

3. An apparatus as claimed in any preceding claim, comprising means for varying at least a location of a sub-portion of the field of view of the at least one camera to determine a sub-portion of the field of view of the at least one camera that comprises image content that corresponds to the target image content as the second sub-portion.

4. An apparatus as claimed in any preceding claim, comprising means for:
displaying in a viewport the field of view of the at least one camera; and
enabling user selection of the first sub-portion of the field of view of the at least one camera.

5. An apparatus as claimed in claim 4, wherein the user-selection of the first sub-portion of the field of view of the at least one camera comprises zooming to display a sub-portion of the field of view of the at least one camera.

6. An apparatus as claimed in claim 4 or 5, wherein the user-selection of the first sub-portion of the field of view of the at least one camera comprises user selection via a touch screen displaying in a viewport at least a part of the field of view of the at least one camera.

7. An apparatus as claimed in any preceding claim comprising means for:
enabling user-determination of the target audio by enabling user-definition of a sub-portion of a sound field recorded by one or more microphones when the apparatus has the second point of view; and
recording audio by the one or more microphones of the apparatus when the apparatus has the user-determined second point of view, the recorded audio comprising a relatively enhanced version of the target audio.

8. An apparatus as claimed in any preceding claim comprising means for providing real-time user guidance for changing a point of view of the apparatus during recording audio comprising the target audio and image content comprising the target image content.

9. An apparatus as claimed in claim 8, wherein the means for providing real-time user guidance for changing a point of view of the apparatus during recording is configured to enabling switching from recording using a first camera with digital zoom to recording using a second camera with optical zoom.

10. An apparatus as claimed in claim 8 or 9 comprising means for:
displaying in a viewport a sub-portion of the field of view of the at least one camera of the apparatus
wherein the means for providing real-time user guidance for changing a point of view of the apparatus during recording is configured to display, in the viewport, an instruction of how to change the point of view of the apparatus.

11. An apparatus as claimed in claim 8, 9 or 10 comprising means for:
displaying in a viewport a sub-portion of the field of view of the at least one camera of the apparatus,
wherein the means for providing real-time user guidance for changing a point of view of the apparatus during recording is configured to vary an alignment between the recorded image and the image displayed in the viewport when an offset from central alignment of the target image content and the recorded image is detected.

12. An apparatus as claimed in any preceding claim comprising: means for:
capturing audio at the one or more microphones of the apparatus while the apparatus has a time-varying user-determined second point of view;
digitally processing the captured audio by the one or more microphones of the apparatus while the apparatus has the time-varying user-determined second point of view, to selectively emphasise the target audio; and
recording the digitally processed audio; and
recording image content comprising the target image content by automatically defining a second sub-portion of the field of view of the at least one camera within the field of view of the at least one camera of the apparatus, while the apparatus has the time-varying user-determined second point of view, wherein the recorded image content is a sub-portion of the field of view of the at least one camera of the apparatus, while the apparatus has the time-varying user-determined second point of view, that comprises the second sub-portion of the field of view of the at least one camera.

13. A method (10) comprising:
enabling user-definition of a first sub-portion (62_1) of a field of view (60) of at least one camera (120) of an apparatus (100) that has a first point of view (40_1), wherein the first sub-portion determines target image content for recorded image content;
enabling user-determination of a second point of view (40_2) of the apparatus (100) for recording target audio (72) by one or more microphones (122) of the apparatus (100);
recording audio by the one or more microphones (122) of the apparatus (100) when the apparatus (100) has the user-determined second point of view (40_2), the recorded audio (82) comprising the target audio (72); and
automatically defining a second sub-portion (62_2) of the field of view (60) of the at least one camera (120) within the field of view (60) of the at least one camera (120) of the apparatus (100), when the apparatus (100) has the user-determined second point of view (40_2), wherein the second sub-portion (62_2) of the field of view (60) of the at least one camera (120) comprises content corresponding to the target image content; and recording a sub-portion (62) of the field of view (60) of the at least one camera (120) of the apparatus (100) as recorded image content (80), when the apparatus (100) has the user-determined second point of view (40_2), wherein the sub-portion (62) comprises the second sub-portion (62_2) of the field of view (60) of the at least one camera (120).

14. A computer program (142) that, when run on a computer, performs:
enabling user-definition of a first sub-portion (62_1) of a field of view (60) of at least one camera (120) of an apparatus (100) that has a first point of view (40_1), wherein the first sub-portion determines target image content for recorded image content;
enabling user-determination of a second point of view (40_2) of the apparatus (100) for recording target audio (72) by one or more microphones (122) of the apparatus (100);
recording audio by the one or more microphones (122) of the apparatus (100) when the apparatus (100) has the user-determined second point of view (40_2), the recorded audio (82) comprising the target audio (72); and
automatically defining a second sub-portion (62_2) of the field of view (60) of the at least one camera (120) within the field of view (60) of the at least one camera (120) of the apparatus (100), when the apparatus (100) has the user-determined second point of view (40_2), wherein the second sub-portion (62_2) of the field of view (60) of the at least one camera (120) comprises content corresponding to the target image content; and recording a sub-portion (62) of the field of view (60) of the at least one camera (120) of the apparatus (100) as recorded image content (80), when the apparatus (100) has the user-determined second point of view (40_2), wherein the sub-portion (62) comprises the second sub-portion (62_2) of the field of view (60) of the at least one camera (120).

## Patentansprüche

1. Vorrichtung (100), die Mittel zum Durchführen von Folgendem umfasst:
Ermöglichen einer Benutzerdefinition eines ersten Unterabschnitts (62_1) eines Sichtfelds (60) von mindestens einer Kamera (120) der Vorrichtung (100), die einen ersten Blickpunkt (40_1) aufweist, wobei der erste Unterabschnitt einen Zielbildinhalt für einen aufgezeichneten Bildinhalt bestimmt;
Ermöglichen einer Benutzerbestimmung eines zweiten Blickpunkts (40_2) der Vorrichtung (100) zum Aufzeichnen von Zielaudio (72) durch ein oder mehrere Mikrofone (122) der Vorrichtung (100) und
Aufzeichnen von Audio durch das eine oder die mehreren Mikrofone (122) der Vorrichtung (100), wenn die Vorrichtung (100) den benutzerbestimmten Blickpunkt (40_2) aufweist, wobei das aufgezeichnete Audio (82) das Zielaudio (72) umfasst; und
automatisches Definieren eines zweiten Unterabschnitts (62_2) des Sichtfelds (60) der mindestens einen Kamera (120) im Sichtfeld (60) der mindestens einen Kamera (120) der Vorrichtung (100), wenn die Vorrichtung (100) den benutzerbestimmten zweiten Blickpunkt (40_2) aufweist,
wobei der zweite Unterabschnitt (62_2) des Sichtfelds (60) der mindestens einen Kamera (120) einen Inhalt umfasst, der dem Zielbildinhalt entspricht; und
Aufzeichnen eines Unterabschnitts (62) des Sichtfelds (60) der mindestens einen Kamera (120) der Vorrichtung (100) als aufgezeichneten Bildinhalt (80), wenn die Vorrichtung (100) den benutzerbestimmten zweiten Blickpunkt (40_2) aufweist, wobei der Unterabschnitt (62) den zweiten Unterabschnitt (62_2) des Sichtfelds (60) der mindestens einen Kamera (120) umfasst.

2. Vorrichtung nach Anspruch 1, die Benutzereingabemittel für eine Benutzerdefinition umfasst, wenn die Vorrichtung den ersten Blickpunkt des ersten Unterabschnitts des Sichtfelds der mindestens einen Kamera der Vorrichtung aufweist, die den ersten Blickpunkt aufweist, um den Zielbildinhalt zu definieren.

3. Vorrichtung nach einem der vorhergehenden Ansprüche, die Mittel zum Variieren mindestens eines Ortes eines Unterabschnitts des Sichtfelds der mindestens einen Kamera umfasst, um einen Unterabschnitt des Sichtfelds der mindestens einen Kamera, die den Bildinhalt umfasst, der dem Zielbildinhalt entspricht, als den zweiten Unterabschnitt zu bestimmen.

4. Vorrichtung nach einem der vorhergehenden Ansprüche, die Mittel zum Durchführen von Folgendem umfasst:
Anzeigen des Sichtfelds der mindestens einen Kamera in einem Darstellungsfeld und
Ermöglichen einer Benutzerauswahl des ersten Unterabschnitts des Sichtfelds der mindestens einen Kamera.

5. Vorrichtung nach Anspruch 4, wobei die Benutzerauswahl des ersten Unterabschnitts des Sichtfelds der mindestens einen Kamera das Zoomen, um einen Unterabschnitt des Sichtfelds der mindestens einen Kamera anzuzeigen, umfasst.

6. Vorrichtung nach Anspruch 4 oder 5, wobei die Benutzerauswahl des ersten Unterabschnitts des Sichtfelds der mindestens einen Kamera eine Benutzerauswahl via einen Touchscreen umfasst, auf dem mindestens ein Teil des Sichtfelds der mindestens einen Kamera in einem Darstellungsfeld angezeigt wird.

7. Vorrichtung nach einem der vorhergehenden Ansprüche, die Mittel zum Durchführen von Folgendem umfasst:
Ermöglichen einer Benutzerbestimmung des Zielaudios durch Ermöglichen einer Benutzerdefinition eines Unterabschnitts eines Schallfelds, das von einem oder mehreren Mikrofonen aufgezeichnet wird, wenn die Vorrichtung den zweiten Blickpunkt aufweist; und
Aufzeichnen von Audio durch das eine oder die mehreren Mikrofone der Vorrichtung, wenn die Vorrichtung den benutzerbestimmten Blickpunkt aufweist, wobei das aufgezeichnete Audio eine relativ verbesserte Version des Zielaudios umfasst.

8. Vorrichtung nach einem der vorhergehenden Ansprüche, die Mittel zum Bereitstellen einer Echtzeitbenutzerführung zum Ändern eines Blickpunkts der Vorrichtung während des Aufzeichnens von Audio umfasst, das das Zielaudio und einen Bildinhalt umfasst, der den Zielbildinhalt umfasst.

9. Vorrichtung nach Anspruch 8, wobei die Mittel zum Bereitstellen einer Echtzeitbenutzerführung zum Ändern eines Blickpunkts der Vorrichtung während des Aufzeichnens dazu ausgelegt sind, das Umschalten vom Aufzeichnen unter Verwendung einer ersten Kamera mit einem digitalen Zoom zum Aufzeichnen unter Verwendung einer zweiten Kamera mit einem optischen Zoom zu ermöglichen.

10. Vorrichtung nach Anspruch 8 oder 9, die Mittel zum Durchführen von Folgendem umfasst:
Anzeigen eines Unterabschnitts des Sichtfelds der mindestens einen Kamera in einem Darstellungsfeld der Vorrichtung
wobei die Mittel zum Bereitstellen einer Echtzeitbenutzerführung zum Ändern eines Blickpunkts der Vorrichtung während des Aufzeichnens dazu ausgelegt sind, im Darstellungsfeld eine Anweisung zum Ändern des Blickpunkts der Vorrichtung anzuzeigen.

11. Vorrichtung nach Anspruch 8, 9 oder 10, die Mittel zum Durchführen von Folgendem umfasst:
Anzeigen eines Unterabschnitts des Sichtfelds der mindestens einen Kamera in einem Darstellungsfeld der Vorrichtung,
wobei die Mittel zum Bereitstellen einer Echtzeitbenutzerführung zum Ändern eines Blickpunkts der Vorrichtung während des Aufzeichnens dazu ausgelegt sind, eine Ausrichtung zwischen dem aufgezeichneten Bild und dem im Darstellungsfeld angezeigten Bild zu variieren, wenn ein Versatz von einer zentralen Ausrichtung des Zielbildinhalts und des aufgezeichneten Bildes detektiert wird.

12. Vorrichtung nach einem der vorhergehenden Ansprüche, die Mittel zum Durchführen von Folgendem umfasst:
Erfassen von Audio an dem einen oder den mehreren Mikrofonen der Vorrichtung, während die Vorrichtung einen zeitlich variierenden benutzerbestimmten zweiten Blickpunkt aufweist;
digitales Verarbeiten des von dem einen oder den mehreren Mikrofonen der Vorrichtung erfassten Audios, während die Vorrichtung den zeitlich variierenden benutzerbestimmten zweiten Blickpunkt aufweist, um das Zielaudio selektiv hervorzuheben; und
Aufzeichnen des digital verarbeiteten Audios und
Aufzeichnen eines Bildinhalts, der den Zielbildinhalt umfasst, durch automatisches Definieren eines zweiten Unterabschnitts des Sichtfelds der mindestens einen Kamera im Sichtfeld der mindestens einen Kamera der Vorrichtung, während die Vorrichtung den zeitlich variierenden benutzerbestimmten zweiten Blickpunkt aufweist, wobei der aufgezeichnete Bildinhalt ein Unterabschnitt des Sichtfelds der mindestens einen Kamera der Vorrichtung ist, während die Vorrichtung den zeitlich variierenden benutzerbestimmten zweiten Blickpunkt aufweist, der den zweiten Unterabschnitt des Sichtfelds der mindestens einen Kamera umfasst.

13. Verfahren (10), das Folgendes umfasst:
Ermöglichen einer Benutzerdefinition eines ersten Unterabschnitts (62_1) eines Sichtfelds (60) von mindestens einer Kamera (120) einer Vorrichtung (100), die einen ersten Blickpunkt (40_1) aufweist, wobei der erste Unterabschnitt einen Zielbildinhalt für einen aufgezeichneten Bildinhalt bestimmt;
Ermöglichen einer Benutzerbestimmung eines zweiten Blickpunkts (40_2) der Vorrichtung (100) zum Aufzeichnen von Zielaudio (72) durch ein oder mehrere Mikrofone (122) der Vorrichtung (100);
Aufzeichnen von Audio durch das eine oder die mehreren Mikrofone (122) der Vorrichtung (100), wenn die Vorrichtung (100) den benutzerbestimmten Blickpunkt (40_2) aufweist, wobei das aufgezeichnete Audio (82) das Zielaudio (72) umfasst; und
automatisches Definieren eines zweiten Unterabschnitts (62_2) des Sichtfelds (60) der mindestens einen Kamera (120) im Sichtfeld (60) der mindestens einen Kamera (120) der Vorrichtung (100), wenn die Vorrichtung (100) den benutzerbestimmten zweiten Blickpunkt (40_2) aufweist,
wobei der zweite Unterabschnitt (62_2) des Sichtfelds (60) der mindestens einen Kamera (120) einen Inhalt umfasst, der dem Zielbildinhalt entspricht; und Aufzeichnen eines Unterabschnitts (62) des Sichtfelds (60) der mindestens einen Kamera (120) der Vorrichtung (100) als aufgezeichneten Bildinhalt (80), wenn die Vorrichtung (100) den benutzerbestimmten zweiten Blickpunkt (40_2) aufweist, wobei der Unterabschnitt (62) den zweiten Unterabschnitt (62_2) des Sichtfelds (60) der mindestens einen Kamera (120) umfasst.

14. Computerprogramm (142), das, wenn es auf einem Computer ausgeführt wird, Folgendes durchführt:
Ermöglichen einer Benutzerdefinition eines ersten Unterabschnitts (62_1) eines Sichtfelds (60) von mindestens einer Kamera (120) einer Vorrichtung (100), die einen ersten Blickpunkt (40_1) aufweist, wobei der erste Unterabschnitt einen Zielbildinhalt für einen aufgezeichneten Bildinhalt bestimmt;
Ermöglichen einer Benutzerbestimmung eines zweiten Blickpunkts (40_2) der Vorrichtung (100) zum Aufzeichnen von Zielaudio (72) durch ein oder mehrere Mikrofone (122) der Vorrichtung (100);
Aufzeichnen von Audio durch das eine oder die mehreren Mikrofone (122) der Vorrichtung (100), wenn die Vorrichtung (100) den benutzerbestimmten Blickpunkt (40_2) aufweist, wobei das aufgezeichnete Audio (82) das Zielaudio (72) umfasst; und
automatisches Definieren eines zweiten Unterabschnitts (62_2) des Sichtfelds (60) der mindestens einen Kamera (120) im Sichtfeld (60) der mindestens einen Kamera (120) der Vorrichtung (100), wenn die Vorrichtung (100) den benutzerbestimmten zweiten Blickpunkt (40_2) aufweist,
wobei der zweite Unterabschnitt (62_2) des Sichtfelds (60) der mindestens einen Kamera (120) einen Inhalt umfasst, der dem Zielbildinhalt entspricht; und Aufzeichnen eines Unterabschnitts (62) des Sichtfelds (60) der mindestens einen Kamera (120) der Vorrichtung (100) als aufgezeichneten Bildinhalt (80), wenn die Vorrichtung (100) den benutzerbestimmten zweiten Blickpunkt (40_2) aufweist, wobei der Unterabschnitt (62) den zweiten Unterabschnitt (62_2) des Sichtfelds (60) der mindestens einen Kamera (120) umfasst.

## Revendications

1. Appareil (100) comprenant un moyen pour :
permettre une définition par l'utilisateur d'une première sous-partie (62_1) d'un champ de vision (60) d'au moins une caméra (120) de l'appareil (100) qui présente un premier point de vue (40_1), dans lequel la première sous-partie détermine un contenu d'image cible pour un contenu d'image enregistrée ;
permettre une détermination par l'utilisateur d'un deuxième point de vue (40_2) de l'appareil (100) pour enregistrer un audio cible (72) par un ou plusieurs microphones (122) de l'appareil (100), et enregistrer un audio par les un ou plusieurs microphones (122) de l'appareil (100) lorsque l'appareil (100) présente un deuxième point de vue (40_2) déterminé par l'utilisateur, l'audio enregistré (82) comprenant l'audio cible (72) ; et
définir automatiquement une deuxième sous-partie (62_2) du champ de vision (60) de l'au moins une caméra (120) dans le champ de vision (60) de l'au moins une caméra (120) de l'appareil (100), lorsque l'appareil (100) présente un deuxième point de vue (40_2) déterminé par l'utilisateur,
dans lequel la deuxième sous-partie (62_2) du champ de vision (60) de l'au moins une caméra (120) comprend un contenu correspondant au contenu d'image cible ; et
enregistrer une sous-partie (62) du champ de vision (60) de l'au moins une caméra (120) de l'appareil (100) comme contenu d'image enregistrée (80), lorsque l'appareil (100) présente un deuxième point de vue (40_2) déterminé par l'utilisateur, dans lequel la sous-partie (62) comprend la deuxième sous-partie (62_2) du champ de vision (60) de l'au moins une caméra (120).

2. Appareil selon la revendication 1, comprenant un moyen d'entrée d'utilisateur pour une définition par l'utilisateur, lorsque l'appareil présente le premier point de vue, de la première sous-partie du champ de vision de l'au moins une caméra de l'appareil qui présente le premier point de vue pour définir le contenu d'image cible.

3. Appareil selon l'une quelconque des revendications précédentes, comprenant un moyen pour faire varier au moins un emplacement d'une sous-partie du champ de vision de l'au moins une caméra pour déterminer, comme deuxième sous-partie, une sous-partie du champ de vision de l'au moins une caméra qui comprend un contenu d'image qui correspond au contenu d'image cible.

4. Appareil selon l'une quelconque des revendications précédentes, comprenant un moyen pour :
afficher, dans une fenêtre de visualisation, le champ de vision de l'au moins une caméra ; et
permettre une sélection par l'utilisateur de la première sous-partie du champ de vision de l'au moins une caméra.

5. Appareil selon la revendication 4, dans lequel la sélection par l'utilisateur de la première sous-partie du champ de vision de l'au moins une caméra comprend un zoom pour afficher une sous-partie du champ de vision de l'au moins une caméra.

6. Appareil selon la revendication 4 ou 5, dans lequel la sélection par l'utilisateur de la première sous-partie du champ de vision de l'au moins une caméra comprend une sélection par l'utilisateur via un écran tactile affichant, dans une fenêtre de visualisation, au moins une partie du champ de vision de l'au moins une caméra.

7. Appareil selon l'une quelconque des revendications précédentes comprenant un moyen pour :
permettre une détermination par l'utilisateur de l'audio cible en permettant une définition par l'utilisateur d'une sous-partie d'un champ sonore enregistré par un ou plusieurs microphones lorsque l'appareil présente le deuxième point de vue ; et
enregistrer un audio par les un ou plusieurs microphones de l'appareil lorsque l'appareil présente le deuxième point de vue déterminé par l'utilisateur, l'audio enregistré comprenant un version relativement améliorée de l'audio cible.

8. Appareil selon l'une quelconque des revendications précédentes comprenant un moyen pour assurer un guidage d'utilisateur en temps réel pour changer un point de vue de l'appareil pendant l'enregistrement d'un audio comprenant l'audio cible et un contenu d'image comprenant le contenu d'image cible.

9. Appareil selon la revendication 8, dans lequel le moyen pour assurer un guidage d'utilisateur en temps réel pour changer un point de vue de l'appareil pendant l'enregistrement est configuré pour permettre de passer d'un enregistrement utilisant une première caméra avec zoom numérique à un enregistrement utilisant une deuxième caméra avec zoom optique.

10. Appareil selon la revendication 8 ou 9, comprenant un moyen pour :
afficher, dans une fenêtre de visualisation, une sous-partie du champ de vision de l'au moins une caméra de l'appareil
dans lequel le moyen pour assurer un guidage d'utilisateur en temps réel pour changer un point de vue de l'appareil pendant l'enregistrement est configuré pour afficher, dans la fenêtre de visualisation, une instruction sur la manière de changer le point de vue de l'appareil.

11. Appareil selon la revendication 8, 9 ou 10, comprenant un moyen pour :
afficher, dans une fenêtre de visualisation, une sous-partie du champ de vision de l'au moins une caméra de l'appareil,
dans lequel le moyen pour assurer un guidage d'utilisateur en temps réel pour changer un point de vue de l'appareil pendant l'enregistrement est configuré pour faire varier un alignement entre l'image enregistrée et l'image affichée dans la fenêtre de visualisation lorsqu'un décalage par rapport à l'alignement central du contenu d'image cible et l'image enregistrée est détecté.

12. Appareil selon l'une quelconque des revendications précédentes, comprenant un moyen pour :
capturer un audio au niveau des un ou plusieurs microphones de l'appareil tandis que l'appareil présente un deuxième point de vue déterminé par l'utilisateur variable dans le temps ;
traiter numériquement l'audio capturé par les un ou plusieurs microphones de l'appareil tandis que l'appareil présente le deuxième point de vue déterminé par l'utilisateur variable dans le temps, pour accentuer sélectivement l'audio cible ; et
enregistrer l'audio traité numériquement ; et
enregistrer un contenu d'image comprenant le contenu d'image cible en définissant automatiquement une deuxième sous-partie du champ de vision de l'au moins une caméra dans le champ de vision de l'au moins une caméra de l'appareil, tandis que l'appareil présente le deuxième point de vue déterminé par l'utilisateur variable dans le temps, dans lequel le contenu d'image enregistrée est une sous-partie du champ de vision de l'au moins une caméra de l'appareil, tandis que l'appareil présente le deuxième point de vue déterminé par l'utilisateur variable dans le temps, qui comprend la deuxième sous-partie du champ de vision de l'au moins une caméra.

13. Procédé (10) comprenant :
la possibilité d'une définition par l'utilisateur d'une première sous-partie (62_1) d'un champ de vision (60) d'au moins une caméra (120) d'un appareil (100) qui présente un premier point de vue (40_1), dans lequel la première sous-partie détermine un contenu d'image cible pour un contenu d'image enregistrée ;
la possibilité d'une détermination par l'utilisateur d'un deuxième point de vue (40_2) de l'appareil (100) pour enregistrer un audio cible (72) par un ou plusieurs microphones (122) de l'appareil (100) ;
l'enregistrement d'un audio par les un ou plusieurs microphones (122) de l'appareil (100) lorsque l'appareil (100) présente un deuxième point de vue (40_2) déterminé par l'utilisateur, l'audio enregistré (82) comprenant l'audio cible (72) ; et
la définition automatique d'une deuxième sous-partie (62_2) du champ de vision (60) de l'au moins une caméra (120) dans le champ de vision (60) de l'au moins une caméra (120) de l'appareil (100), lorsque l'appareil (100) présente un deuxième point de vue (40_2) déterminé par l'utilisateur, dans lequel la deuxième sous-partie (62_2) du champ de vision (60) de l'au moins une caméra (120) comprend un contenu correspondant au contenu d'image cible ; et
l'enregistrement d'une sous-partie (62) du champ de vision (60) de l'au moins une caméra (120) de l'appareil (100) comme contenu d'image enregistrée (80), lorsque l'appareil (100) présente un deuxième point de vue (40_2) déterminé par l'utilisateur, dans lequel la sous-partie (62) comprend la deuxième sous-partie (62_2) du champ de vision (60) de l'au moins une caméra (120).

14. Programme informatique (142) qui, lorsqu'il est exécuté sur un ordinateur, réalise :
la possibilité d'une définition par l'utilisateur d'une première sous-partie (62_1) d'un champ de vision (60) d'au moins une caméra (120) d'un appareil (100) qui présente un premier point de vue (40_1), dans lequel la première sous-partie détermine un contenu d'image cible pour un contenu d'image enregistrée ;
la possibilité d'une détermination par l'utilisateur d'un deuxième point de vue (40_2) de l'appareil (100) pour enregistrer un audio cible (72) par un ou plusieurs microphones (122) de l'appareil (100) ;
l'enregistrement d'un audio par les un ou plusieurs microphones (122) de l'appareil (100) lorsque l'appareil (100) présente un deuxième point de vue (40_2) déterminé par l'utilisateur, l'audio enregistré (82) comprenant l'audio cible (72) ; et
la définition automatique d'une deuxième sous-partie (62_2) du champ de vision (60) de l'au moins une caméra (120) dans le champ de vision (60) de l'au moins une caméra (120) de l'appareil (100), lorsque l'appareil (100) présente un deuxième point de vue (40_2) déterminé par l'utilisateur, dans lequel la deuxième sous-partie (62_2) du champ de vision (60) de l'au moins une caméra (120) comprend un contenu correspondant au contenu d'image cible ; et
l'enregistrement d'une sous-partie (62) du champ de vision (60) de l'au moins une caméra (120) de l'appareil (100) comme contenu d'image enregistrée (80), lorsque l'appareil (100) présente un deuxième point de vue (40_2) déterminé par l'utilisateur, dans lequel la sous-partie (62) comprend la deuxième sous-partie (62_2) du champ de vision (60) de l'au moins une caméra (120).
